(19) Europäisches Patentamt
European Patent Office
Office européen des brevets

(11) Publication number : 0 488 827 A1

(12) # EUROPEAN PATENT APPLICATION

(21) Application number : 91311208.2

(22) Date of filing : 02.12.91

(51) Int. Cl.$^5$ : H04M 11/02

(30) Priority : 30.11.90 JP 338334/90

(43) Date of publication of application : 03.06.92 Bulletin 92/23

(84) Designated Contracting States : AT BE CH DE ES FR GB IT LI LU NL SE

(71) Applicant : NIPPON INTERPHONE CO., LTD
27-13, Nishiogikita 2-chome
Suginami-ku, Tokyo (JP)

(72) Inventor : Hiroshi, Nagata, c/o Nippon Interphone Co., Ltd.
27-13, Nishiogikita 2-chome
Suginami-ku, Tokyo (JP)
Inventor : Lequy, Michel, c/o Nippon Interphone Co., Ltd.
27-13, Nishiogikita 2-chome
Suginami-ku, Tokyo (JP)
Inventor : Dierckx, Daniel, c/o Nippon Interphone Co., Ltd.
27-13, Nishiogikita 2-chome
Suginami-ku, Tokyo (JP)

(74) Representative : Price, Paul Anthony King
D. Young & Co. 10 Staple Inn
London WC1V 7RD (GB)

(54) **Interphone.**

(57) Each unit (7) of the interphone comprises call switches (2) by an entrance, a main control unit (3) and room stations (4) in the individual rooms. The unit (7) may be connected to other units (7) in order to produce an interphone of variable size, with the main units (3) working together to route calls from the call switches (2) to the room stations (4).

FIG. 1

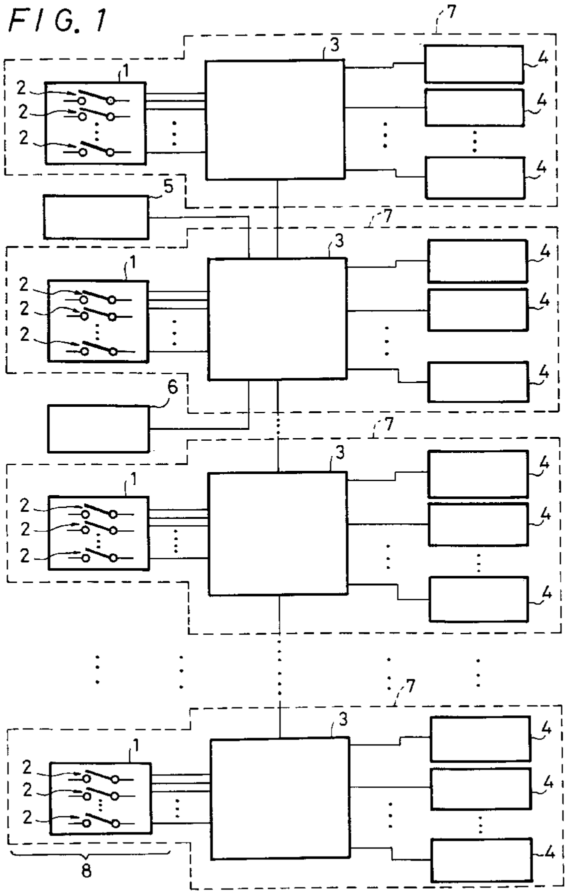


EP 0 488 827 A1

The present invention generally relates to interphones and, more particularly, is directed to an interphone suitable for use in a so-called multiple dwelling house, such as a condominium or the like.

A conventional interphone comprises a door station having a call button and a room station having a handset connected to the door station. When the visitor depresses the call button of the door station, chime tone sounds in the room station, and the user can talk with the visitor by picking up the handset.

In a recent interphone, the door station is provided with a television camera and the room station is provided with a liquid crystal display monitor, whereby the user can monitor the visitor on the liquid crystal display monitor.

When such interphone is applied to a multiple dwelling house such as condominium or the like, the following two methods have been proposed.

In the first method, a door station and a room station are provided for each dwelling unit in the multiple dwelling house.

In the second method, door stations having a call button for each dwelling unit in the multiple dwelling house and a room station for each dwelling unit are provided and an exclusive main unit having a switching function is installed between the door stations and the room stations.

According to the first method, however, the number of door stations is relatively large, requiring a lot of space for installing the door stations. Further, according to the second method, the exclusive main unit must be specially designed to suit the number and arrangement of door and room stations.

According to the present invention, there is provided an interphone comprising: a unit having a predetermined number of call switches for installing by an entrance, a corresponding number of room stations for installing in respective rooms and a main unit connected between said call switches and said room stations; and communication apparatus for installing by the entrance and having a speaker and a microphone, said communication apparatus being connectable to said unit so as to be capable of communicating with said room stations through said main unit; wherein said unit is connectable to other such units so that, when a plurality of said units are utilized, information from the active main unit is exchanged among said main units.

Embodiments of the present invention each provide an interphone (i) which can be easily used in a multiple dwelling house, such as a condominium or the like; (ii) in which the number of room stations can be easily varied; and (iii) which is relatively inexpensive.

Because the unit is composed of the main unit, the room stations and the call switches, it is possible to control the room stations and the call switches of the predetermined party with the single main unit. Also, the main units of the units can confirm to other which main one is occupied. Thus, when the interphone is used in a multiple dwelling house or the like, by preparing a number of units which corresponds to the number which results from dividing the number of dwellings constituting the multiple dwelling housing by the number of room stations, the interphone can be easily applied to a multiple dwelling house having an arbitrary number of dwellings.

Further, since it is possible to treat the units as components supplied from third party manufacturers, the interphone of the present invention can be relatively inexpensive.

The invention will now be described by way of non-limiting embodiment with reference to the accompanying drawings, in which:-

FIG. 1 is a block diagram showing an embodiment of an interphone according to the present invention;

FIG. 2, which is formed from FIGS. 2A and 2B drawn on two sheets for the sake of clarity, is a diagram showing in more detail the arrangement of the interphone of Fig. 1; and

FIG. 3 is a flowchart explaining the operation of the interphone of FIG. 2.

Referring to FIG. 1, there is provided a switch panel 1 which is located at an entrance (or in a control room or at a rear entrance). This switch panel 1 includes n call switches or call buttons 2 and the n call buttons 2 are connected to a main unit 3.

The main unit 3 has a switching function and is connected to room stations 4,the number of which is less than the number n of the call buttons 2 housed in the switch panel 1 (if desired, n room stations 4 can be connected to the main unit 3). A combination of the switch panel 1, the room station 4 and the main unit 3 will hereinafter be referred to as a unit 7.

Each of the room stations 4 incorporates a handset or the like. The main unit 3 is connected to a communication unit 5 installed by the switch panel 1. The communication unit 5 has a built-in microphone and a built-in speaker, not shown. Further, the main units 3 in the units 7 are connected in series so as to communicate with each other.

Assuming that the number m of dwellings in the multiple dwelling house to which the interphone is to be applied exceeds the above number n, then p main units 3 may be used as shown by the following equation (1) or (2).

In case m can be divided by n : $p = m \div n$ (1)

In case m cannot be divided by n : $p = [m \div n] + 1$ (2)

where the symbol $[m \div n]$ means the maximum integer which does not exceed $m \div n$. In the interphone thus arranged as shown in FIG. 1, the switch panel 1 and the communication unit 5 constitute a so-called common door station 8.

In the thus arranged interphone, when the visitor depresses an arbitrary call button 2 of the switch panel 1, then such depression of the call button 2 is detected by the main unit 3 connected to the depressed call button 2. The main unit 3 connected to such call button 2 determines on the basis of information obtained from other adjacent serially-connected main units 3 whether or not the interphone is utilized. If the main unit 3 determines that the interphone is not utilized, then the room station 4 corresponding to the depressed call button 2 and the communication unit 5 are connected to transmit an outgoing call signal to the room station 4. Then, the user picks up the handset of the room station 4 so that the visitor can talk with the user through the room station 4.

As described above, in accordance with the embodiment shown in FIG. 1, a separate door station and room station is not needed for each dwelling, unlike in the prior art. Also, the number of exclusive main units does not equal the number of dwellings and this makes it possible to install the door station in a relatively small space. Furthermore, the exclusive main unit need not be designed each time the interphone is installed, which can make the interphone relatively inexpensive.

In the main unit 3, a television camera 6 may be connected to the switch panel 1 side installed at the entrance. In that event, if a liquid crystal display monitor is connected to the room station 4, there is then the advantage that the user can view a visitor through the liquid crystal display monitor in a multiplex communication fashion by utilizing the same wiring as the communication line.

FIG. 2 is a diagram showing more fully the arrangement of the unit 7 which includes the main unit 3, the switch panel 1 and the room station 4 as shown in FIG. 1. FIG. 2 is formed of FIGS. 2A and 2B with FIG. 2A to the left of and partly overlapping FIG. 2B. In FIG. 2, like parts corresponding to those of FIG. 1 are marked with the same references and therefore need not be described in detail.

It will be seen in FIG. 2 that the switch panel 1 includes a light-emitting diode (LED) 11 which flashes when the communication unit 5 and the room station 4 are connected in communication mode and 12 call buttons 2 (n = 12). The light-emitting diode 11 is connected through a connector 12 to a positive voltage source +12V and also connected to a busy indicating circuit 13 to a port B of a microprocessor 14. Also, the call buttons 2 are connected through a connector 16 to ports K1 to K12 of the microprocessor 14.

The microprocessor 14 includes a central processing unit (CPU), a read only memory (ROM), a random access memory (RAM), a timer, an I/O interface or the like, not shown. The microprocessor 14 controls operation of the switch panel 1, the communication unit 5 and the room station 4 in accordance with programs written beforehand in the ROM.

Interfaces 18 are respectively connected to the ports Q1 to Q12 of the microprocessor 14 and the interfaces 18 are respectively connected through connectors 19, 20 to the room stations 4. The interface 18 is operated such that, when a drive signal is supplied to an amplifier 21 from the port Q1 of the microprocessor 14, then a relay 22 is made operable to cause movable contacts 23, 24 of the relay 22 to be simultaneously closed. Thus, a two-wire 25 from the room station 4 and a two-wire 26 from the communication unit 5 are connected together. Through the two-wires 25, 26, audio and video signals are transmitted in a so-called two-wire wiring fashion (i.e., the same signal is transmitted through the two-wires 25, 26 from an electrical standpoint). In the embodiment of FIG. 2, the communication unit 5 has a built-in television camera 6. The television camera 6 and the communication unit 5 are made operable when supplied with an output signal from a port D through a photo-coupler 30 and a connector 31.

The status of the above two-wires 25, 26 such as the communication state or the like is detected by a communication supervisory circuit 27 and a detected signal is supplied to a port C and a chip select portion CS of the microprocessor 14. A status signal at the chip select port CS and the signal from the two-wire 26 are supplied through the connector 29 to the main unit 3 of the preceding stage.

Also, the state of an inhibit port INH is set in response to the above communication mode, and a state signal at the inhibit port INH and the signal from the two-wire 26 are supplied through a connector 33 to the main unit 3 of the succeeding stage.

The room station 4 includes a monitor button 34, a handset 36 and a liquid crystal display monitor 37. The voltage + 12V is supplied to terminals 39 and 40 of the main unit 3 and the voltage + 12V and a voltage + 5V from a three-terminal regulator 41 are supplied to the inside of the main unit 3.

Operation of the unit 7 in the embodiment of FIG. 2 will be described with reference to a flowchart forming FIG. 3. The routine of the flowchart shown in FIG. 3 is stored in the ROM (not shown) of the microprocessor 14.

Referring to FIG. 3, following the Start of operation, the microprocessor 14 watches the ports K1 to K12 to determine whether or not the call button 2 is depressed. If the call button 2 is depressed, then a call signal is latched in the microprocessor 14 and an ID (identifying) number of the call button 2 which transmits the call signal is stored in the RAM (not shown) of the microprocessor 14 at step S1. In this embodiment, the call signal is transmitted from the call button 2 connected to the port K2 as shown in FIG. 2.

Then, the processing proceeds to the next decision step S2, whereat it is determined by reading the state of the chip select port CS of the microprocessor 14 of the main unit 3 of the preceding stage through the connector 29 whether or not the main unit 3 of the preceding stage is being called.

If the main unit 3 of the preceding stage is being called as represented by a YES at decision step S2, then such main unit 3 cannot answer the incoming call of the call button 2 corresponding to the above ID number so that the operation is ended. If the main unit 3 of the preceding stage is not being called as represented by a NO at decision step S2, then the relay 22 is operated through the ports Q1 to Q12 so as to open the movable contacts 23 and 24. By this operation, all room stations 4 are electrically disconnected temporarily in step S3. The reason that the room stations 4 are temporarily disconnected is to automatically release the LED monitor 37 from such state that a picture at the entrance can be monitored by depressing the monitor button 34 on the room station 4 side.

Then, the processing proceeds to step S4, whereat the state of the inhibit port INH is inverted and a call inhibit command is transmitted through the connector 33 to the main units 3 of stages next to the succeeding stage. Thus, all other switch panels 1 can be inhibited from being utilized.

Then, in order to connect the two-wire 25 of the room station 4 corresponding to the above ID number (room station 4 connected to the port Q2 corresponding to the port K2) and the two-wire 26 of the communication unit 5, the relay 22 substantially connected to the port Q2 is operated in step S5. At that time, chime tone sounds informing that the corresponding room station 4 is called.

In this state, in order to make the communication unit 5 located on the switch panel 1 side operable, the photo-coupler 30 is operated through the port D of the microprocessor 14 in step S6.

Then, the processing proceeds to the next decision step S7, whereat the microprocessor 14 determines through the port C by the communication supervisory circuit 27 whether or not the handset 36 is picked up from the cradle, or whether or not the room station 4 answers the call.

If the handset 36 is not picked up as represented by a NO at decision step S7, then the processing proceeds to the next decision step S8. It is determined in decision step S8 whether or not 30 seconds are passed in the absence of the user. If it is determined that the user is not at home and 30 seconds are passed, then the operation is ended automatically.

If 30 seconds are not passed as represented by a NO at decision step S8, then the processing proceeds to the next decision step S9, whereat it is determined through the communication supervisory circuit 27 whether or not the monitor button 34 in the room station 4 is depressed. If the monitor button 34 is not depressed within 30 seconds as represented by a NO at decision step S9, then the processing returns through decision step S7 to decision step S8. If 30 seconds are passed at step S8, then the operation is ended automatically.

If the monitor button 34 is depressed within 30 seconds as represented by a YES at decision step S9, then the processing proceeds to step S10. In step S10, the video signal from the television camera 6 is supplied through the two-wires 26, 25 to the LED monitor 37 of the room station 4, whereby a picture of the entrance is displayed on the picture screen of the LED monitor 37. In that event, a visitor's picture also is displayed on the picture screen of the LED monitor 37.

If the user determines on the basis of the picture on the picture screen that the visitor is a salesman or the like, then the user replaces the handset 36 in the cradle. After 30 seconds, the operation is automatically ended (the processing again returns through decision step S7 to decision step S8).

If on the other hand the room station 4 answers the call within 30 seconds as represented by a YES at decision step S7 (if the handset 36 is picked up in the room station 4), then the processing proceeds to step S11. In step S11, the LED 11 is lit through the port B and the busy indicating circuit 13. In this state, the user on the room station 4 side and the visitor on the switch panel 1 side can talk with each other.

In that case, the counting of 60 seconds is started at the next decision step S12. If 60 seconds are passed as represented by a YES at decision step S12, then the communication state is automatically released and the operation is ended because this compensates for incorrect use, such as when the user does not replace the handset 36 on the cradle correctly,

Then, the processing proceeds to the next decision step S13, whereat it is determined whether or not the user replaces the handset 36 on the cradle until 60 seconds are passed. If a YES is output at decision step S13, then the operation is ended. If a NO is output at decision step S13, then the processing returns to step S12.

According to the embodiment shown in FIG. 2, the unit 7 is constructed such that a combination of the switch panel 1 having 12 call buttons and the 12 room stations 4 is controlled by the main unit 3 and also the main units 3 of such units 7 are connected in series so as to communicate with each other by using information from the active main unit. Therefore, if the multiple dwelling house includes, for example, 100 dwellings, then the interphone of the present invention can be applied to such multiple dwelling house by preparing 9 (i.e., $100 \div 12 = 8.3$, which corresponds to the case of the above equation (2)) main units 3 without utilizing any exclusive main unit. Thus, the interphone of this invention is inexpensive.

As described above, since the unit is composed of the main unit, the room stations of the predetermined number and the call buttons of the predetermined number, it becomes possible to control the room stations and the call buttons of the predetermined party by the single main unit. Also, the main units of the unit can be arranged so as to communicate with each other by using information from the active main unit. Thus, when the interphone is applied to the multiple dwelling house or the like, by preparing a number of units corresponding to the number which results from dividing the number of dwellings constituting the multiple dwelling house by the above predetermined number, the interphone of the present invention can be easily used in the multiple dwelling house having an arbitrary number of dwellings

Further, since it becomes possible to treat the units as options supplied from third party manufacturers, the interphone of the present invention can be inexpensive

Having described the preferred embodiment of the invention with reference to the accompanying drawings, it is to be understood that the invention is not limited to that precise embodiment and that various changes and modifications thereof could be effected by one skilled in the art without departing from the invention.

## Claims

**1.** An interphone comprising:

a unit (7) having a predetermined number of call switches (2) for installing by an entrance, a corresponding number of room stations (4) for installing in respective rooms and a main unit (3) connected between said call switches (2) and said room stations (4); and

communication apparatus (5) for installing by the entrance and having a speaker and a microphone, said communication apparatus (5) being connectable to said unit (7) so as to be capable of communicating with said room stations (4) through said main unit (3);

wherein said unit (7) is connectable to other such units (7) so that, when a plurality of said units (7) are utilized, information from the active main unit (3) is exchanged among said main units (3).

**2.** An interphone according to claim 1, wherein said main unit (3) of said unit (7) is connectable in series to said main units (3) of other units (7) so that information from the active main unit (3) is exchanged among said main units (3).

**3.** An interphone according to claim 1 or 2, further comprising a television camera (6) for installing by the entrance and, in each room station (4), a monitor (37), whereby the user of any room station can view a visitor.

**4.** An interphone according to claim 3, wherein each monitor (37) is a liquid crystal display monitor.

**5.** An interphone according to claim 3 or 4, wherein the visitor's image is multiplexed with control information along wiring to the appropriate room station (4).

**6.** An interphone according to any one of claims 1 to 5, wherein said interphone is arranged to automatically stop operating after a predetermined time period.

FIG. 1

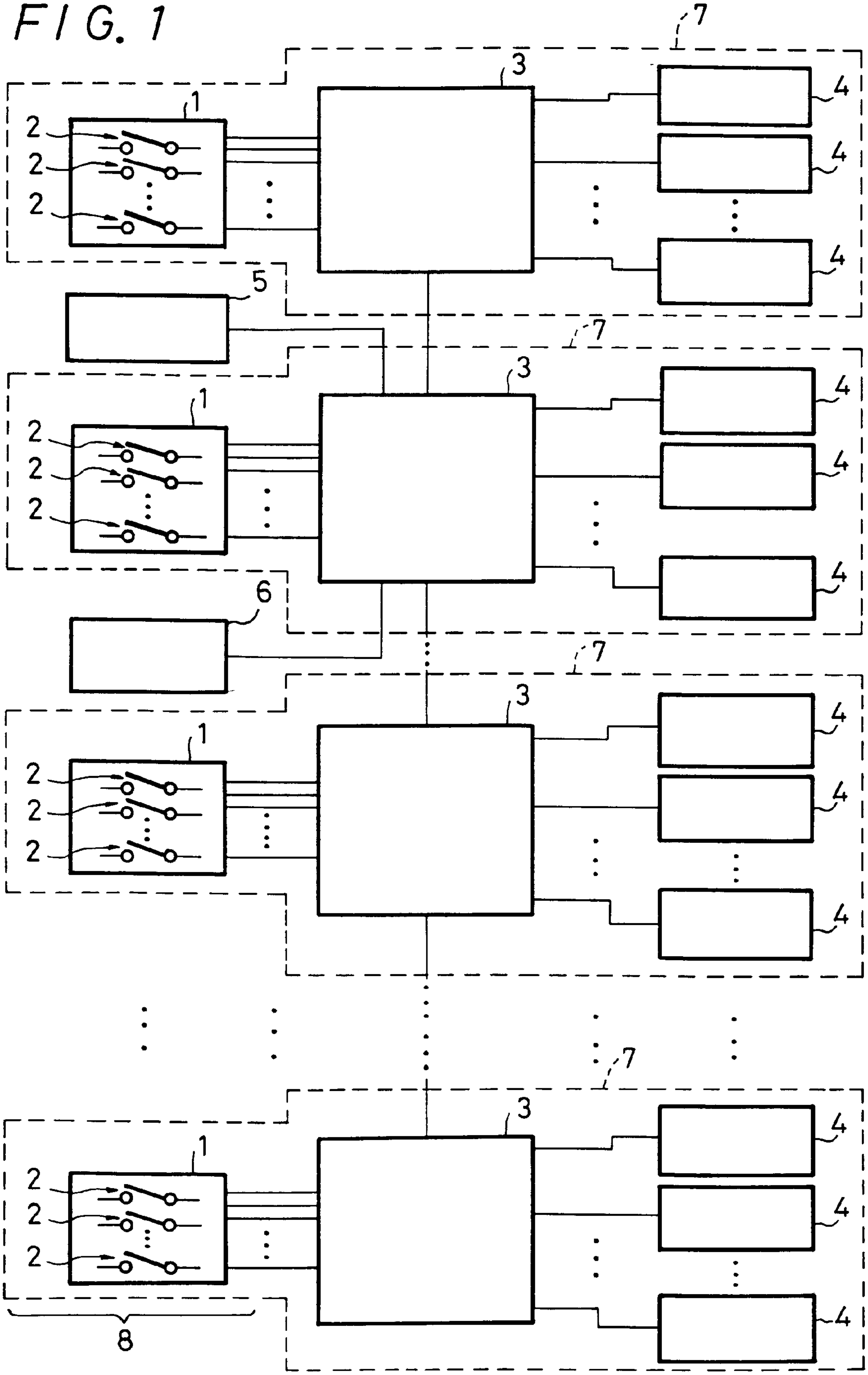

FIG. 2

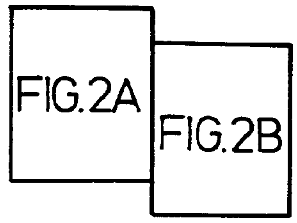
FIG.2A
FIG.2B

*FIG. 2A*

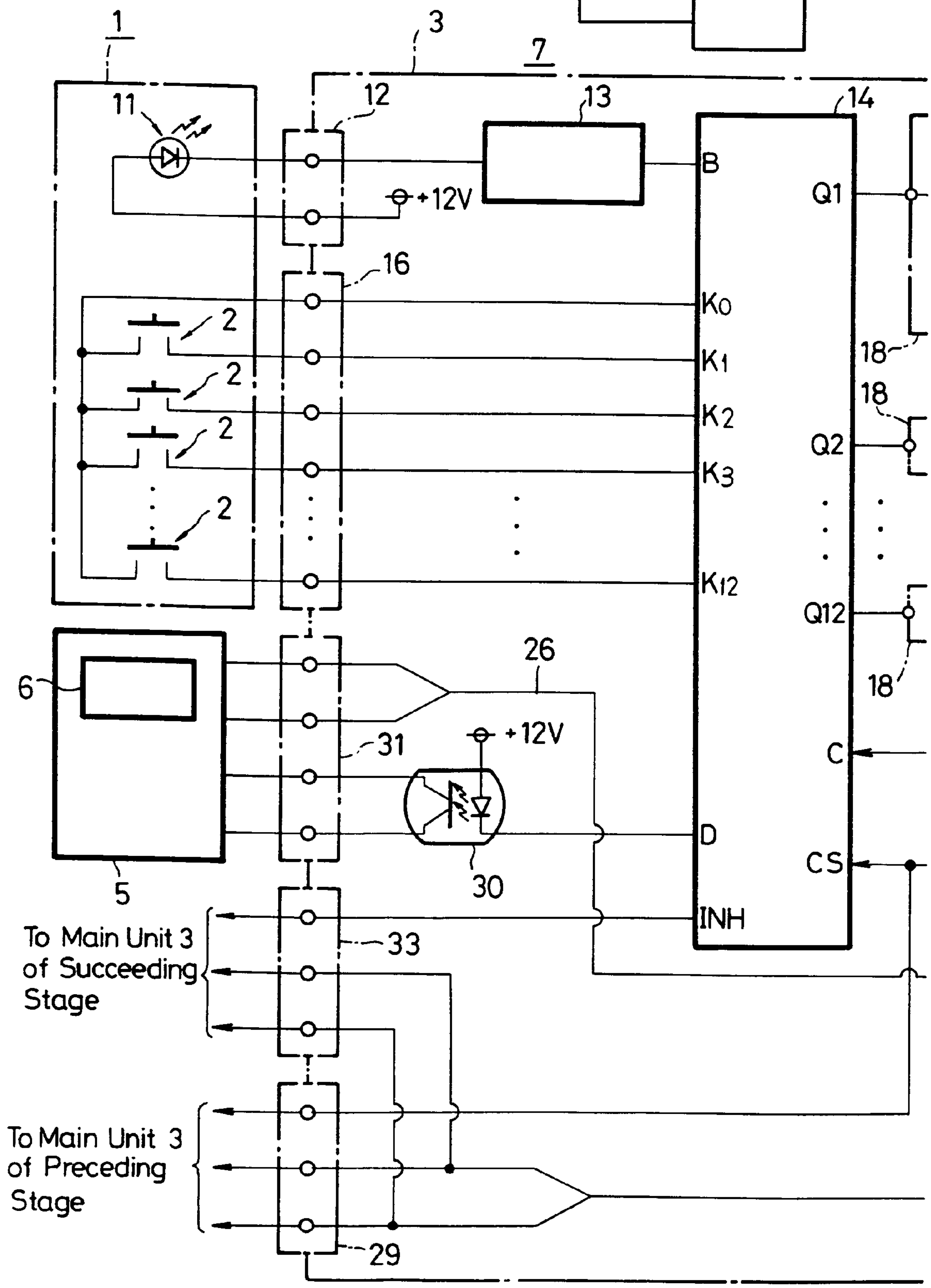
1
3
7
11
12
13
14
+12V
B
Q1
16
2
K0
K1
K2
K3
K12
18
Q2
Q12
6
26
31
+12V
C
D
CS
INH
30
5
To Main Unit 3 of Succeeding Stage
33
To Main Unit 3 of Preceding Stage
29

FIG. 2B

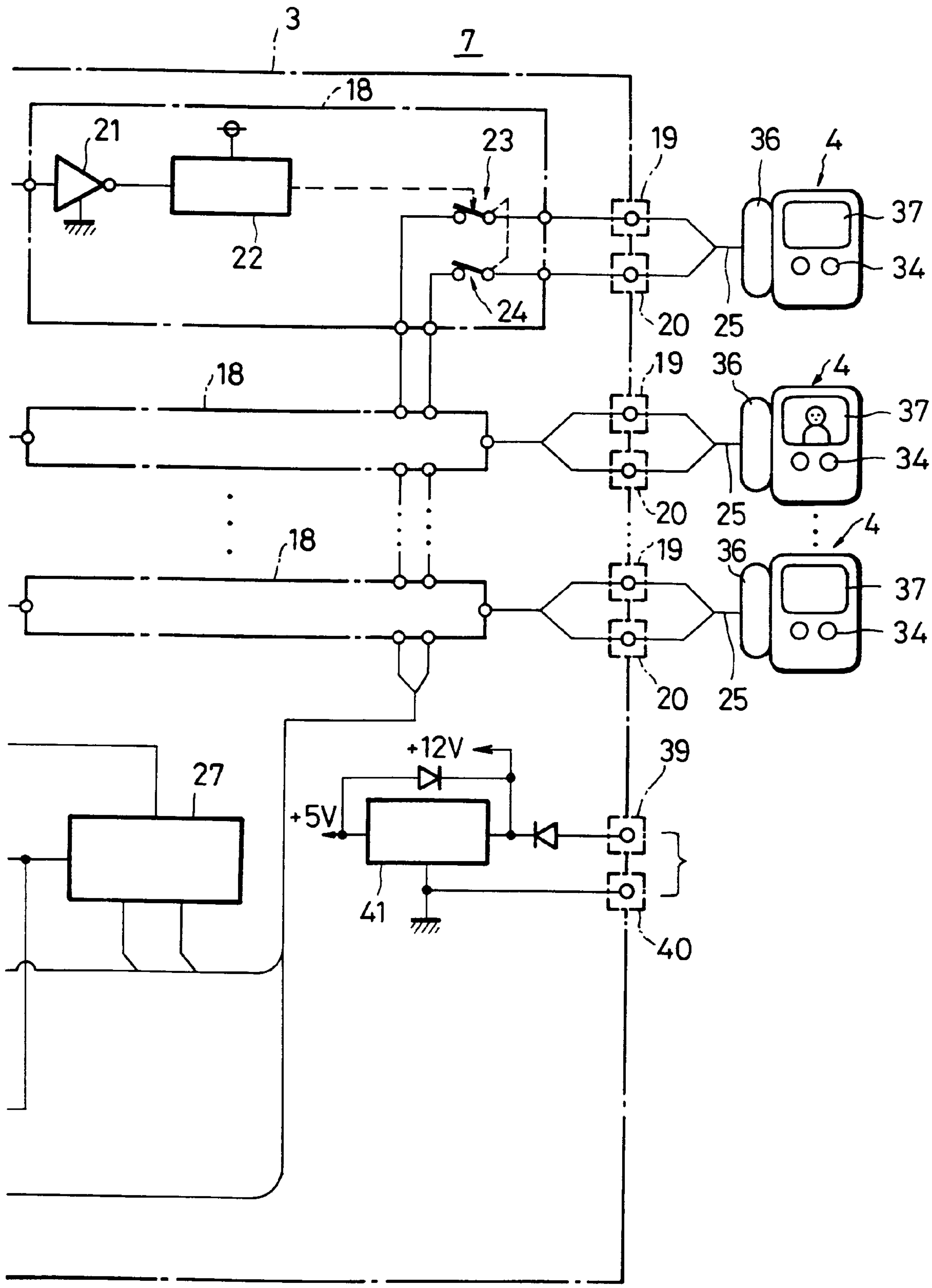
3
7
18
21
22
23
24
19
20
25
36
4
37
34
18
19
36
4
37
34
20
25
18
19
36
4
37
34
20
25
+12V
+5V
27
41
39
40

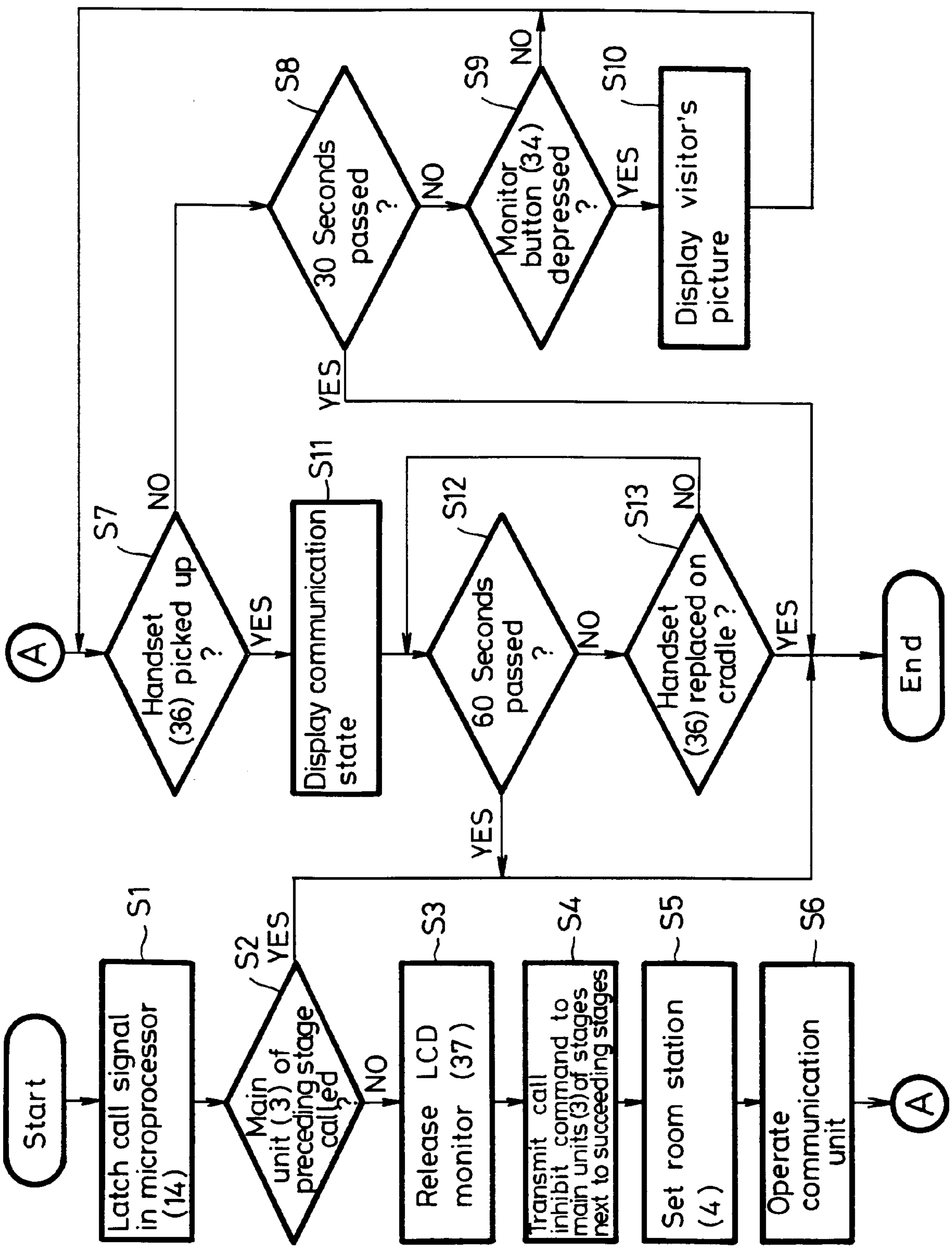
Start
Latch call signal in microprocessor (14)
S1
Main unit (3) of preceding stage called ?
S2
YES
NO
Release LCD monitor (37)
S3
Transmit call inhibit command to main units (3) of stages next to succeeding stages
S4
Set room station (4)
S5
Operate communication unit
S6
A
A
Handset (36) picked up ?
S7
NO
YES
Display communication state
S11
60 Seconds passed ?
S12
YES
NO
Handset (36) replaced on cradle ?
S13
NO
YES
End
30 Seconds passed ?
S8
YES
NO
Monitor button (34) depressed ?
S9
NO
YES
Display visitor's picture
S10

FIG. 3

European Patent Office

# EUROPEAN SEARCH REPORT

Application Number

EP 91 31 1208

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2 225 195 (MATSUSHITA)<br>* page 24, line 4 - page 29, line 4; figures 15,16 *<br>* page 16, line 28 - page 17, line 6 * | 1-3,5,6 | H04M11/02 |
| A | | 4 | |
| | --- | | |
| Y | EP-A-0 032 982 (S.SIEDLE&SOEHNE)<br>* page 1, line 25 - page 5, line 17 *<br>* page 6, line 17 - page 10, line 24; figures 1,3,4 * | 1-3,5,6 | |
| | ----- | | |

TECHNICAL FIELDS SEARCHED (Int. Cl.5 )

H04M
H04L

The present search report has been drawn up for all claims

| Place of search | Date of completion of the search | Examiner |
|---|---|---|
| THE HAGUE | 05 MARCH 1992 | MIKKELSEN C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)